# EUROPÄISCHE PATENTANMELDUNG

(11) **EP 4 696 405 A2**
(43) Veröffentlichungstag der Anmeldung: **18.02.2026**
(21) Anmeldenummer: 25190946.1
(22) Anmeldetag: 22.07.2025
(51) Int. Cl.: B01F 27/052, B01F 27/07, B01F 27/072, B01F 27/70, B01F 35/92, B02C 13/10, B02C 15/08, B01F 33/83, B01F 33/80, B02C 17/16, B02C 17/18, B01F 35/90, B02C 13/28

(54) **VORRICHTUNG SOWIE RÜHRWERKSSYSTEM ZUR MECHANISCHEN AKTIVIERUNG VON ORGANISCHEN UND/ODER ANORGANISCHEN STOFFEN UND/ODER STOFFGEMISCHEN IN CHEMISCHEN, PHARMAZEUTISCHEN, LEBENSMITTELTECHNISCHEN UND/ODER BAUSTOFFTECHNISCHEN ANWENDUNGEN**

(30) Priorität: 14.08.2024 DE 102024123299
(71) Anmelder: NETZSCH Trockenmahltechnik GmbH, 95100 Selb (DE)
(72) Erfinder: BRANDT, Ann-Christin, 63796 Kahl am Main (DE); SIMON, Claus, 63755 Alzenau (DE); WÜHRL, Mario, 95100 Selb (DE)
(74) Vertreter: Isarpatent

(57) **Zusammenfassung**

Die vorliegende Erfindung schafft eine Vorrichtung (1) zur mechanischen Aktivierung von organischen und/oder anorganischen Stoffen und/oder Stoffgemischen in chemischen, pharmazeutischen, lebensmitteltechnischen und/oder baustofftechnischen Anwendungen. Die Vorrichtung (1) umfasst eine scheibenartige Rührkörpereinrichtung (2) zur drehfesten Montage auf einer Rührwelle (12); und mindestens eine Schlageinheit (3), die einen Kopfbereich (4) mit einer Aktivierungsfläche (5) zum Zusammenwirken mit Aktivierungskörpern (K) aufweist, wobei die mindestens eine Schlageinheit (3) radial außen in Bezug zu einer Rotationsachse (X) der scheibenartigen Rührkörpereinrichtung (2) an der scheibenartigen Rührkörpereinrichtung (2) befestigt ist. Ferner schafft die vorliegende Erfindung ein Rührwerkssystem (10) mit einer derartigen Vorrichtung (1).

## Beschreibung

Die vorliegende Erfindung betrifft eine Vorrichtung zur mechanischen Aktivierung von organischen und/oder anorganischen Stoffen und/oder Stoffgemischen in chemischen, pharmazeutischen, lebensmitteltechnischen und/oder baustofftechnischen Anwendungen sowie ein Rührwerkssystem mit einer derartigen Vorrichtung.

In der Mechanochemie geht es darum, dass Material durch eine mechanische Aktivierung, insbesondere durch Scher- und Normalbeanspruchungen, in einen aktiven Zustand versetzt wird, in dem das Material besonders reaktiv ist. Unter Mechanochemie versteht man somit die mechanische Aktivierung von chemischen Reaktionen. Dies kann unter anderem auf eine Destabilisierung der Atombindung und Änderungen der Kristallstrukturen zurückgeführt werden. Begünstigt werden die Reaktionen zudem durch die Zerkleinerung der Partikel und das Entstehen neuer reaktiver Oberflächen. Gegenüber bisherigen Reaktionen kommt die Mechanochemie ohne Lösemittel und ohne thermische Behandlung aus, welche einen negativen Einfluss auf die Umwelt haben können.

Im Stand der Technik kommen hierzu bisher Schwingmühlen und Planetenkugelmühlen sowie Extrusionsprozesse zum Einsatz. Die dabei verwendeten Maschinen sind gekennzeichnet durch einen unzureichenden Aktivierungsgrad sowie der nur bedingt möglichen Skalierung auf einen produktionstechnischen Maßstab. Ebenso ist ein Anpassen bzw. Einstellen der geometrischen und prozesstechnischen Aktivierungsparametern an die zu aktivierenden Stoffe oder Stoffgemische derzeit nur begrenzt gegeben.

Ein Großteil der Reaktionen, die in Kugelmühlen ablaufen, werden Katalysen zugeordnet. Bekannte Reaktionen sind hier unter anderem C-N oder C-C Kreuzkopplung, Zykloadditivierung, Polymerreaktionen oder C-H Aktivierung. Ein bekannter Nachteil bei Katalysen ist, dass die Rückgewinnung des Katalysators meist nur schwer zu bewerkstelligen ist.

Es ist Aufgabe der vorliegenden Erfindung, eine Vorrichtung sowie ein Rührwerkssystem für chemische, pharmazeutische, lebensmitteltechnische und/oder baustofftechnische Anwendungen bereitzustellen, die ohne Lösemittel ausgeführt und auf einen hinreichenden produktionstechnischen Maßstab skaliert werden können.

Erfindungsgemäß wird diese Aufgabe jeweils durch die Gegenstände der unabhängigen Ansprüche gelöst.

Gemäß einem ersten Aspekt der Erfindung ist eine Vorrichtung zur mechanischen Aktivierung von organischen und/oder anorganischen Stoffen und/oder Stoffgemischen in chemischen, pharmazeutischen, lebensmitteltechnischen und/oder baustofftechnischen Anwendungen vorgesehen. Die Vorrichtung umfasst eine scheibenartige Rührkörpereinrichtung zur drehfesten Montage auf einer Rührwelle. Ferner umfasst die Vorrichtung mindestens eine Schlageinheit, die einen Kopfbereich mit einer Aktivierungsfläche zum Zusammenwirken mit Aktivierungskörpern aufweist. Die mindestens eine Schlageinheit ist radial außen in Bezug zu einer Rotationsachse der scheibenartigen Rührkörpereinrichtung an der scheibenartigen Rührkörpereinrichtung befestigt.

Gemäß einem zweiten Aspekt der Erfindung ist ein Rührwerkssystem zur mechanischen Aktivierung von organischen und/oder anorganischen Stoffen und/oder Stoffgemischen in chemischen, pharmazeutischen, lebensmitteltechnischen und/oder baustofftechnischen Anwendungen vorgesehen. Das Rührwerkssystem umfasst einen Behälter zur Aufnahme von Aktivierungskörpern sowie von einem zu aktivierenden Stoff und/oder Stoffgemisch. Das Rührwerkssystem umfasst ferner eine Rührwelle, die in dem Behälter und drehbar in Bezug zu dem Behälter gelagert ist. Weiterhin umfasst das Rührwerkssystem mindestens eine Vorrichtung nach dem ersten Aspekt der Erfindung, wobei die scheibenartige Rührkörpereinrichtung auf der Rührwelle drehfest montiert ist.

Eine der vorliegenden Erfindung zugrunde liegende Idee besteht darin, anhand der Vorrichtung eine mechanische Aktivierung der in das Rührwerkssystem bzw. in den Behälter eingebrachten Stoffe und/oder Stoffgemische zu bewirken, insbesondere die Durchführung von mechanochemischen Reaktionen in dem Rührwerkssystem zu beschleunigen oder überhaupt erst zu ermöglichen. Die sich im Inneren des Behälters befindlichen Aktivierungskörper werden durch die Rotationsbewegung der mindestens einen Schlageinheit bzw. der Schläger in die für die Aktivierungsreaktion gewünschte Bewegung versetzt.

Insbesondere kann die mindestens eine Schlageinheit in Bezug zu der Rotationsachse der scheibenartigen Rührkörpereinrichtung von der scheibenartigen Rührkörpereinrichtung radial bzw. in radialer Richtung abragen.

Im Sinne der vorliegenden Erfindung bezeichnet die mechanische Aktivierung von organischen und/oder anorganischen Stoffen und/oder Stoffgemischen in chemischen, pharmazeutischen, lebensmitteltechnischen und/oder baustofftechnischen Anwendungen das Einwirken von mechanischen Belastungen auf den Stoff und/oder das Stoffgemisch, sodass chemische Reaktionen, insbesondere Reaktionen, die Polymere betreffen, in Gang gesetzt bzw. aktiviert werden. Zum Beispiel können derartige mechanische Belastungen zur Depolymerisation von Polymeren führen. Insbesondere werden bei der mechanischen Aktivierung keine Lösungsmittel oder dergleichen verwendet. Das bedeutet, die mechanische Aktivierung zur mechanochemischen Wirkung wird in einem trockenen Behälter durchgeführt.

Ein Vorteil der vorliegenden Erfindung ist, dass keine Nebenprodukte entstehen. Ein weiterer Vorteil ist, dass durch die erfindungsgemäße Vorrichtung deutlich weniger Energie benötigt wird und/oder die Reaktion des Stoffes und/oder Stoffgemisches stark beschleunigt ablaufen kann.

Darüber hinaus können ein Aktivierungsgrad erhöht und eine Skalier- und Anpassungsfähigkeit für unterschiedliche Anwendungen verbessert werden.

Vorteilhafte Ausführungsformen und Weiterbildungen ergeben sich aus den auf die unabhängigen Ansprüche rückbezogenen Unteransprüchen sowie aus der Beschreibung unter Bezugnahme auf die Figuren.

Gemäß einer Ausführungsform der vorliegenden Erfindung weist die mindestens eine Schlageinheit eine Vielzahl von Schlageinheiten auf, die in einer Umfangsrichtung der scheibenartigen Rührkörpereinrichtung gleichmäßig verteilt angeordnet sind. Auf diese Weise kann der zu aktivierende Stoff und/oder das Stoffgemisch durch die Vielzahl von Schlageinheiten im Wesentlichen gleichmäßig aktiviert werden, wenn die scheibenartige Rührkörpereinrichtung rotiert.

Gemäß einer weiteren Ausführungsform der vorliegenden Erfindung ist die Vielzahl von Schlageinheiten in Abhängigkeit von einem Winkel zwischen zwei benachbarten Schlageinheiten, von einem Durchmesser der scheibenartigen Rührkörpereinrichtung, von einer Drehzahl der scheibenartigen Rührkörpereinrichtung und von einem Durchmesser der Aktivierungskörper gewählt. Somit kann die Anzahl der Schlageinheiten an der scheibenartigen Rührkörpereinrichtung bedarfsgerecht gewählt werden. Der Winkel zwischen zwei benachbarten Schlageinheiten kann zum Beispiel etwa 10° bis etwa 180°, insbesondere etwa 10° bis etwa 120°, betragen.

Zum Beispiel kann die mindestens eine Schlageinheit eine Länge im Bereich von etwa 10 mm bis etwa 120 mm aufweisen. Insbesondere kann der Kopfbereich der mindestens einen Schlageinheit eine Länge im Bereich von etwa 10 mm bis etwa 120 mm aufweisen.

Gemäß einer weiteren Ausführungsform der vorliegenden Erfindung weist die scheibenartige Rührkörpereinrichtung mindestens eine Durchgangsöffnung auf, die sich in Richtung der Rotationsachse erstreckt. Darüber hinaus kann eine Größe der mindestens einen Durchgangsöffnung veränderbar sein, sodass eine Durchlässigkeit der scheibenartigen Rührkörpereinrichtung variiert werden kann. Auf diese Weise kann eine durchströmende Luftmenge und ein zu aktivierender Stoff und/oder Stoffgemisch gezwungen werden die scheibenartige Rührkörpereinrichtung zum umströmen.

Gemäß einer weiteren Ausführungsform der vorliegenden Erfindung weist die mindestens eine Durchgangsöffnung eine Vielzahl von Durchgangsöffnungen auf, die in einer Umfangsrichtung der scheibenartigen Rührkörpereinrichtung gleichmäßig verteilt angeordnet sind. Somit kann der Stoff und/oder das Stoffgemisch die scheibenartige Rührkörpereinrichtung passieren bzw. durchströmen ohne in Kontakt mit der mindestens einen Schlageinheit zu kommen.

Gemäß einer weiteren Ausführungsform der vorliegenden Erfindung ist die Aktivierungsfläche in Bezug zu der Rotationsachse in einem Winkelbereich von etwa 0° bis etwa 45° ausgerichtet. Somit kann die Aktivierungsfläche Scherkräfte verbessern und dadurch eine höhere Aktivierung bei niedrigerem Energieverbrauch bewirken. Die Aktivierungsfläche ist beispielsweise im Wesentlichen eben ausgebildet.

Gemäß einer weiteren Ausführungsform der vorliegenden Erfindung ist der Kopfbereich austauschbar mit der Schlageinheit verbunden. Auf diese Weise kann der Kopfbereich nach Bedarf gewechselt werden, wenn zum Beispiel die Aktivierungsfläche verschlissen ist oder wenn zum Beispiel eine andere Größe und/oder Form der Aktivierungsfläche für den zu aktivierenden Stoff und/oder Stoffgemisch vorgesehen ist. Damit kann der Kopfbereich modulartig ausgebildet sein. Vorteilhafterweise kann somit eine Flächenbelastung der Aktivierungsfläche verbessert oder eine Breite des Kopfbereichs in Abhängigkeit von einer Härte des zu aktivierenden Stoffes und/oder Stoffgemisches verändert werden.

Gemäß einer weiteren Ausführungsform der vorliegenden Erfindung weist der Kopfbereich eine im Wesentlichen würfelartige Form auf.

Gemäß einer weiteren Ausführungsform der vorliegenden Erfindung weist die mindestens eine Schlageinheit einen Verlängerungsarm auf, welcher zwischen der scheibenartigen Rührkörpereinrichtung und der Aktivierungsfläche angeordnet ist. Dabei kann ein erster Endbereich des Verlängerungsarms an der scheibenartigen Rührkörpereinrichtung befestigt sein und ein zweiter, dem ersten Endbereich abgewandter Endbereich mit der Aktivierungsfläche gekoppelt sein.

Gemäß einer Ausführungsform des Rührwerkssystems der vorliegenden Erfindung weist ein radial äußeres Ende der mindestens einen Schlageinheit einen Abstand zu dem Behälter im Bereich des zweifachen bis zehnfachen eines Durchmessers der Aktivierungskörper auf. Auf diese Weise können die Aktivierungskörper an der mindestens einen Schlageinheit vorbeiströmen, wobei eine gewünschte Aktivierungswirkung durch die mindestens eine Schlageinheit sicher gestellt werden kann.

Gemäß einer weiteren Ausführungsform der vorliegenden Erfindung weist die mindestens eine Vorrichtung eine Vielzahl von Vorrichtungen auf, die in Reihe auf der Rührwelle angeordnet sind. Zum Beispiel kann die Vielzahl bzw. Anzahl von Vorrichtungen 4 bis 20, insbesondere 7 bis 15, betragen. Alternativ oder zusätzlich kann die Vielzahl bzw. Anzahl von Vorrichtungen abhängig von dem Durchmesser der Aktivierungskörper und einem Verhältnis von Länge zu Durchmesser des Behälters sein.

Gemäß einer weiteren Ausführungsform der vorliegenden Erfindung sind jeweils die mindestens eine Schlageinheit benachbarter Vorrichtungen der Vielzahl von Vorrichtungen mit einem Versatz von 5° bis 90° zueinander auf der Rührwelle angeordnet. Somit können die Aktivierungsflächen vergrößert und/oder die Abstände zwischen den benachbarten Vorrichtungen verringert werden, ohne dass die Schlageinheiten der benachbarten Vorrichtungen miteinander kollidieren. Alternativ können jeweils die mindestens eine Schlageinheit benachbarter Vorrichtungen der Vielzahl von Vorrichtungen in einer Flucht zueinander auf der Rührwelle angeordnet sein.

Ein Abstand zwischen zwei Vorrichtungen kann zum Beispiel zwischen einem 10-fachen und 30-fachen oder zwischen einem 4- und 100-fachen eines Durchmessers der Aktivierungskörper betragen. Insbesondere kann der Abstand zwischen zwei Kopfbereichen von in einer Flucht zueinander angeordneten Schlageinheiten bemessen sein.

Gemäß einer weiteren Ausführungsform der vorliegenden Erfindung weist der Behälter eine Vielzahl von voneinander verschiedenen Aktivierungszonen auf, die entlang einer Durchströmungsrichtung des zu aktivierenden Stoffes und/oder Stoffgemisches nacheinander angeordnet sind. Dabei kann eine Anzahl, eine Art und/oder eine Ausgestaltung der Vielzahl von voneinander verschiedenen Aktivierungszonen in Abhängigkeit des zu aktivierenden Stoffes und/oder Stoffgemisches gewählt sein.

Die Durchströmungsrichtung korrespondiert zum Beispiel mit der Rotationsachse der scheibenartigen Rührkörpereinrichtung beziehungsweise der Rührwelle. Der Behälter kann ein Verhältnis von Länge zu Durchmesser in einem Bereich von etwa 2 bis etwa 5 aufweisen. Vorzugsweise ist der Behälter zylinderförmig ausgebildet. Die Rotationsachse der Rührwelle kann zum Beispiel im Wesentlichen horizontal in dem Behälter ausgerichtet sein. Insbesondere kann die Rührwelle zentrisch in dem Behälter drehbar angebracht sein.

Darüber hinaus kann der Behälter feststehend in Bezug zu einer Umgebung sein. Optional kann der Behälter an seiner Innenseite eine Beschichtung aufweisen. Die Beschichtung kann ein reaktives Material, zum Beispiel Palladium, enthalten. Durch die Beschichtung kann die mechanochemische Reaktionswirkung in dem Behälter verbessert oder überhaupt ermöglicht werden.

Gemäß einer weiteren Ausführungsform der vorliegenden Erfindung umfasst die Vielzahl von voneinander verschiedenen Aktivierungszonen zumindest eine Aktivierungszone ausgewählt aus der Gruppe von einer Einlaufzone zum verbesserten Einzug des zu aktivierenden Stoffes und/oder Stoffgemisches, einer Zerkleinerungszone zur Bereitstellung einer für die Aktivierung geeigneten Partikelgrößenverteilung, einer Aktivierungszone zur Schaffung einer größtmöglichen Aktivierung, einer Relaxationszone und einer Austragszone zur Rückhaltung der Aktivierungskörper und Vermeidung von Reaktionsprozessen des aktivierten Stoffes und/oder Stoffgemisches. Beispielsweise sind die zuvor genannten Aktivierungszonen in der genannten Reihenfolge entlang der Durchströmungsrichtung angeordnet. Die Vielzahl von voneinander verschiedenen Aktivierungszonen können zum Beispiel die Einlaufzone, die Zerkleinerungszone, die Aktivierungszone und die Austragszone umfassen. Die Relaxationszone kann dabei optional ergänzt werden.

Dabei kann die Einlaufzone zumindest ein Einlaufwerkzeug aufweisen, wobei das Einlaufwerkzeug insbesondere als Einzugsschnecke, als Vorbrechelement oder vergleichbares ausgebildet ist. Das zumindest eine Einlaufwerkzeug kann mehrere Einlaufwerkzeuge gleicher Art oder verschiedener Art kombinieren. Die Zerkleinerungszone bzw. Voraktivierungszone kann insbesondere dazu ausgebildet sein, eine für die Aktivierung geeignete Partikelgrößenverteilung zu erzielen, wobei je nach Art des zu aktivierenden Stoffes und/oder Stoffgemisches eine Erzeugung oder Vermeidung von Feinstanteil vorgesehen ist. Weiterhin kann die Aktivierungszone dazu ausgebildet sein, eine größtmögliche Aktivierung über eine Steuerung einer Verweilzeit in der Aktivierungszone und eine Beanspruchungsart und Beanspruchungsintensität in der Aktivierungszone zu erreichen. Die Austragszone bzw. Auslaufzone kann ein Trennsystem zur Rückhaltung der Aktivierungskörper und Vermeidung von Reaktionsprozessen des aktivierten Stoffes und/oder Stoffgemisches aufweisen.

Anhand einer vorbestimmten Kombination von verschiedenen konstruktiven Aktivierungsparametern und von verschiedenen prozesstechnischen Aktivierungsparametern kann der zu aktivierende Stoff und/oder das Stoffgemisch durch die Aktivierungszonen geführt werden. Somit kann ein optimaler mechanochemischer Reaktionsablauf bereitgestellt werden. Die konstruktiven Aktivierungsparameter umfassen zum Beispiel unterschiedliche geometrische Ausführungen der scheibenartigen Rührkörpereinrichtung, des Verlängerungsarms und/oder des Kopfbereichs der Schlageinheit. Die prozesstechnischen Aktivierungsparameter umfassen zum Beispiel eine Umfangsgeschwindigkeit, einen Füllgrad der Aktivierungskörper, eine Temperatur in dem Behälter und/oder eine Durchströmung des Behälters mit einem für die mechanochemische Reaktion notwendigen Prozessgas.

Gemäß einer weiteren Ausführungsform der vorliegenden Erfindung sind die Aktivierungskörper im Wesentlichen kugelförmig ausgebildet, wobei ein kugeläquivalenter Durchmesser der Aktivierungskörper im Bereich von etwa 1 mm bis etwa 15 mm liegt. Die Aktivierungskörper können aus Stahl, Keramik, Kunststoff, Verbundmaterial, reaktivem Werkstoff wie beispielsweise Palladium, und/oder einer Werkstoffkombination daraus hergestellt sein. Darüber hinaus können die Aktivierungskörper mit einem der zuvor genannten Werkstoffe oder einer Werkstoffkombination daraus beschichtet sein.

Gemäß einer weiteren Ausführungsform der vorliegenden Erfindung weist der Behälter einen Doppelmantel zur Isolierung seines Innenraums gegenüber einer Umgebung auf. Alternativ oder zusätzlich kann das Rührwerkssystem ein Temperieraggregat zum Heizen oder Kühlen des Behälters aufweisen. Dabei kann das Temperieraggregat mit dem Behälter thermisch gekoppelt sein. Auf diese Weise kann der Behälter bzw. sein Innenraum gemäß der für eine Aktivierungsreaktion erforderlichen Temperatur beheizt, gekühlt oder sowohl beheizt als auch gekühlt werden.

Weiterhin kann abhängig von der Aktivierungsreaktion eine Bewegung der Aktivierungskörper, die zu einer Stoßbeanspruchung und/oder einer Scherbeanspruchung führt, einstellbar sein.

Gemäß einer weiteren Ausführungsform der vorliegenden Erfindung ist die Rührwelle motorisch angetrieben. Zum Beispiel kann die Rührwelle durch einen außerhalb des Behälters angeordneten Motor angetrieben sein, wobei der Motor in der Drehzahl variierbar ausgebildet und betreibbar ist.

Gemäß einer weiteren Ausführungsform der vorliegenden Erfindung weist das Rührwerkssystem eine Einlauföffnung und eine Auslauföffnung auf, wobei die Einlauföffnung und die Auslauföffnung auf gegenüberliegenden Seiten des Behälters angeordnet sind. Im Bereich der Einlauföffnung kann zum Beispiel das Vorbrechelement angeordnet, insbesondere angebracht, sein. Alternativ oder zusätzlich kann die Auslauföffnung an der Austragszone angeordnet sein. Dabei kann das Trennsystem in die Auslauföffnung eingebaut sein.

Zur Unterstützung oder Verbesserung der Aktivierungsreaktion kann über eine zusätzliche Öffnung des Behälters ein Reaktionsgas, ein Fluid oder ein Feststoff in den Behälter zugegeben werden.

Gemäß einer weiteren Ausführungsform der vorliegenden Erfindung umfasst das Rührwerkssystem ferner eine Distanzbuchse, die zwischen benachbarten Vorrichtungen auf der Rührwelle montiert ist. Dabei kann die Distanzbuchse zum Beispiel eine Durchgangsöffnung aufweisen, die mit der Durchgangsöffnung der scheibenartigen Rührkörpereinrichtung korrespondiert, sodass die Durchgangsöffnung der Distanzbuchse und die Durchgangsöffnung der scheibenartigen Rührkörpereinrichtung eine gemeinsame Durchgangsöffnung bilden können. Mit anderen Worten können die Durchgangsöffnung der Distanzbuchse und die Durchgangsöffnung der scheibenartigen Rührkörpereinrichtung in einer Flucht angeordnet sein. Damit kann eine Luftführung und folglich eine Steuerung einer Strömungsrichtung und einer Strömungsgeschwindigkeit beeinflusst werden. Die Distanzbuchse kann im Durchmesser und in der Form variieren. Die Distanzbuchse dient insbesondere einer gezielten Führung der Luft und des zu aktivierenden Stoffes und/oder Stoffgemisches durch den Behälter.

Zum Beispiel kann die Rührwelle einteilig oder mehrteilig ausgebildet sein. Alternativ oder zusätzlich kann die Rührwelle als Massivwelle oder als Hohlwelle ausgebildet sein.

Die obigen Ausführungsformen und Weiterbildungen lassen sich, sofern sinnvoll, beliebig miteinander kombinieren. Insbesondere sind sämtliche Merkmale der Vorrichtung auf das zugehörige Verfahren übertragbar, und umgekehrt. Weitere mögliche Ausführungsformen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand von Ausführungsbeispielen unter Bezugnahme auf die beiliegenden Figuren der Zeichnungen näher erläutert. Von den Figuren zeigen:
- Fig. 1: eine schematische Schnittansicht eines Rührwerkssystems zur mechanischen Aktivierung von organischen und/oder anorganischen Stoffen und/oder Stoffgemischen in chemischen, pharmazeutischen, lebensmitteltechnischen und/oder baustofftechnischen Anwendungen gemäß einem Ausführungsbeispiel der Erfindung;
- Fig. 2: eine schematische Detailansicht eines Ausschnitts einer Rührwelle eines Rührwerkssystems gemäß einem weiteren Ausführungsbeispiel der Erfindung mit einer Vielzahl von versetzt zueinander angeordneten Schlageinheiten;
- Fig. 3: eine schematische Seitenansicht einer Vorrichtung zur mechanischen Aktivierung von organischen und/oder anorganischen Stoffen und/oder Stoffgemischen in chemischen, pharmazeutischen, lebensmitteltechnischen und/oder baustofftechnischen Anwendungen gemäß einem weiteren Ausführungsbeispiel der Erfindung; (geschlossene Ausführung)
- Fig. 4: eine schematische Seitenansicht der Vorrichtung aus Fig. 3 gemäß einem weiteren Ausführungsbeispiel der Erfindung mit einer Vielzahl von Durchgangsöffnungen in der Rührkörpereinrichtung; und (teilweise offene Ausführung)
- Fig. 5: eine schematische Seitenansicht der Vorrichtung aus Fig. 3 und 4 gemäß einem weiteren Ausführungsbeispiel der Erfindung mit einer Vielzahl von Durchgangsöffnungen in der Rührkörpereinrichtung. (offene Ausführung)

In den Figuren der Zeichnung sind gleiche, funktionsgleiche und gleich wirkende Elemente, Merkmale und Komponenten - sofern nichts Gegenteiliges ausgeführt ist - jeweils mit denselben Bezugszeichen versehen.

Obwohl vorliegend spezifische Ausführungsformen und Weiterbildungen dargestellt und beschrieben sind, wird der Fachmann bevorzugen, dass eine Vielzahl von alternativen und/oder gleichartigen Ausführungen die dargestellten und beschriebenen spezifischen Ausführungsbeispiele ersetzen können, ohne vom Umfang der vorliegenden Erfindung abzukehren. Diese Anmeldung soll allgemein alle Abwandlungen oder Änderungen der hierin beschriebenen spezifischen Ausführungsbeispiele abdecken.

Die beiliegenden Figuren sollen ein weiteres Verständnis von Ausführungsformen der Erfindung vermitteln und dienen im Zusammenhang mit der Beschreibung der Erklärung von Prinzipien und Konzepten der Erfindung. Andere Ausführungsbeispiele und viele der genannten Vorteile ergeben sich im Hinblick auf die Zeichnungen. Die Zeichnungen sind lediglich als schematische Zeichnungen zu verstehen und die Elemente der Zeichnungen sind nicht notwendigerweise maßstabsgetreu zueinander dargestellt. Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

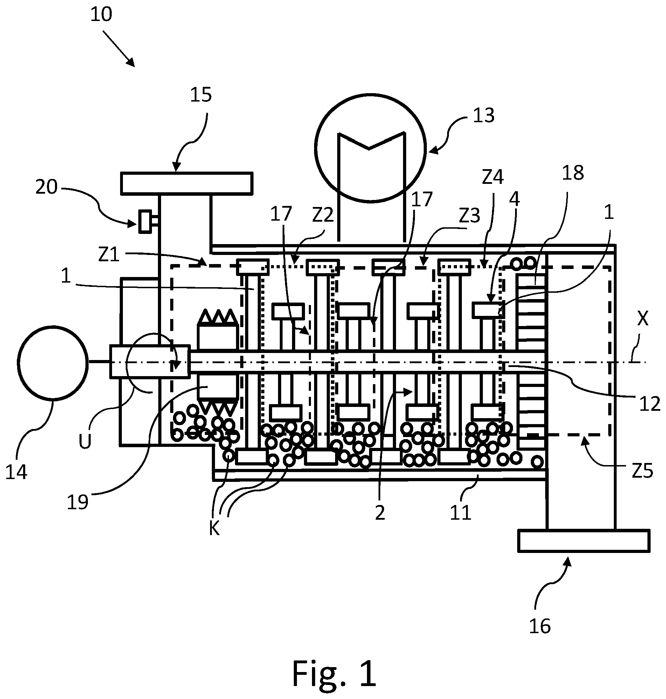

Fig. 1 zeigt eine schematische Schnittansicht eines Rührwerkssystems 10 zur mechanischen Aktivierung von organischen und/oder anorganischen Stoffen und/oder Stoffgemischen in chemischen, pharmazeutischen, lebensmitteltechnischen und/oder baustofftechnischen Anwendungen gemäß einem Ausführungsbeispiel der Erfindung.

Das Rührwerkssystem 10 umfasst beispielhaft einen Behälter 11 zur Aufnahme von Aktivierungskörpern K sowie von einem zu aktivierenden Stoff und/oder Stoffgemisch, eine Rührwelle 12, ein Temperieraggregat 13 zum Heizen oder Kühlen des Behälters 11, einen Motor 14, eine Einlauföffnung 15, eine Auslauföffnung 16, zwei Distanzbuchsen 17, ein Trennsystem 18, ein Vorbrechelement 19 und eine zusätzliche Öffnung 20.

Darüber hinaus umfasst das Rührwerkssystem 10 eine Vielzahl von Vorrichtungen 1 zur mechanischen Aktivierung von organischen und/oder anorganischen Stoffen und/oder Stoffgemischen in chemischen, pharmazeutischen, lebensmitteltechnischen und/oder baustofftechnischen Anwendungen. Jede Vorrichtung 1 umfasst eine scheibenartige Rührkörpereinrichtung 2, die auf der Rührwelle 12 drehfest montiert ist, sowie eine Vielzahl von Schlageinheiten 3. Die Vielzahl von Schlageinheiten 3 weist jeweils einen Kopfbereich 4 mit einer Aktivierungsfläche 5 zum Zusammenwirken mit den Aktivierungskörpern K auf. Die Vielzahl von Schlageinheiten 3 ist radial außen in Bezug zu einer Rotationsachse X der scheibenartigen Rührkörpereinrichtung 2 an der scheibenartigen Rührkörpereinrichtung 2 befestigt. Insbesondere kann die Vielzahl von Schlageinheiten 3 in Bezug zu der Rotationsachse X der scheibenartigen Rührkörpereinrichtung 2 von der scheibenartigen Rührkörpereinrichtung 2 radial bzw. in radialer Richtung abragen.

Wie in Fig. 1 beispielhaft illustriert ist, können die Vielzahl von Vorrichtungen 1 in Reihe auf der Rührwelle 12 angeordnet sein. Zum Beispiel kann die Vielzahl bzw. Anzahl von Vorrichtungen 4 bis 20, insbesondere 7 bis 15, besonders bevorzugt 8, betragen. Alternativ oder zusätzlich kann die Vielzahl bzw. Anzahl von Vorrichtungen 1 abhängig von dem Durchmesser der Aktivierungskörper K und einem Verhältnis von Länge zu Durchmesser des Behälters 11 sein.

Die Schlageinheiten 3 benachbarter Vorrichtungen der Vielzahl von Vorrichtungen 1 können zum Beispiel jeweils mit einem Versatz von 5° bis 90° zueinander auf der Rührwelle 12 angeordnet sein. Somit können die Aktivierungsflächen 5 vergrößert und/oder die Abstände zwischen den benachbarten Vorrichtungen verringert werden, ohne dass die Schlageinheiten 3 der benachbarten Vorrichtungen 1 miteinander kollidieren. Alternativ können jeweils die Schlageinheiten 3 benachbarter Vorrichtungen der Vielzahl von Vorrichtungen 1 in einer Flucht zueinander auf der Rührwelle 12 angeordnet sein.

Die Rührwelle 12 ist in dem Behälter 11 und drehbar in Bezug zu dem Behälter 11 gelagert. Dabei kann ein radial äußeres Ende der jeweiligen Schlageinheit 3 einen Abstand zu dem Behälter 11 im Bereich des zweifachen bis zehnfachen eines Durchmessers der Aktivierungskörper K aufweisen. Zum Beispiel können die Aktivierungskörper K im Wesentlichen kugelförmig ausgebildet sein, wie dies schematisch in Fig. 1 dargestellt ist, wobei ein kugeläquivalenter Durchmesser der Aktivierungskörper K im Bereich von etwa 1 mm bis etwa 15 mm liegt. Die Aktivierungskörper K können aus Stahl, Keramik, Kunststoff, Verbundmaterial, und/oder reaktivem Werkstoff wie beispielsweise Palladium hergestellt sein. Alternativ oder zusätzlich können die Aktivierungskörper K aus einer Werkstoffkombination der zuvor genannten Werkstoffe hergestellt sein. Darüber hinaus können die Aktivierungskörper K mit einem der zuvor genannten Werkstoffe oder einer Werkstoffkombination daraus beschichtet sein.

Optional kann der Behälter 11 einen Doppelmantel zur Isolierung seines Innenraums gegenüber einer Umgebung aufweisen. Das Temperieraggregat 13 kann mit dem Behälter 11 thermisch gekoppelt sein. Auf diese Weise kann der Behälter 11 bzw. sein Innenraum gemäß der für eine Aktivierungsreaktion erforderlichen Temperatur beheizt, gekühlt oder sowohl beheizt als auch gekühlt werden.

Weiterhin kann abhängig von der Aktivierungsreaktion eine Bewegung der Aktivierungskörper K, die zu einer Stoßbeanspruchung und/oder einer Scherbeanspruchung führt, einstellbar sein.

Der Motor 14 kann zum Beispiel außerhalb des Behälters 11 angeordnet sein und die Rührwelle 12 motorisch antreiben. Der Motor 14 kann dabei in der Drehzahl variierbar ausgebildet und betreibbar sein.

Die Einlauföffnung 15 und die Auslauföffnung 16 können zum Beispiel auf gegenüberliegenden Seiten des Behälters 11 angeordnet sein. Im Bereich der Einlauföffnung 15 kann zum Beispiel das Vorbrechelement 19 angeordnet, insbesondere angebracht, sein. Alternativ oder zusätzlich kann das Trennsystem 18 in die Auslauföffnung 16 eingebaut sein.

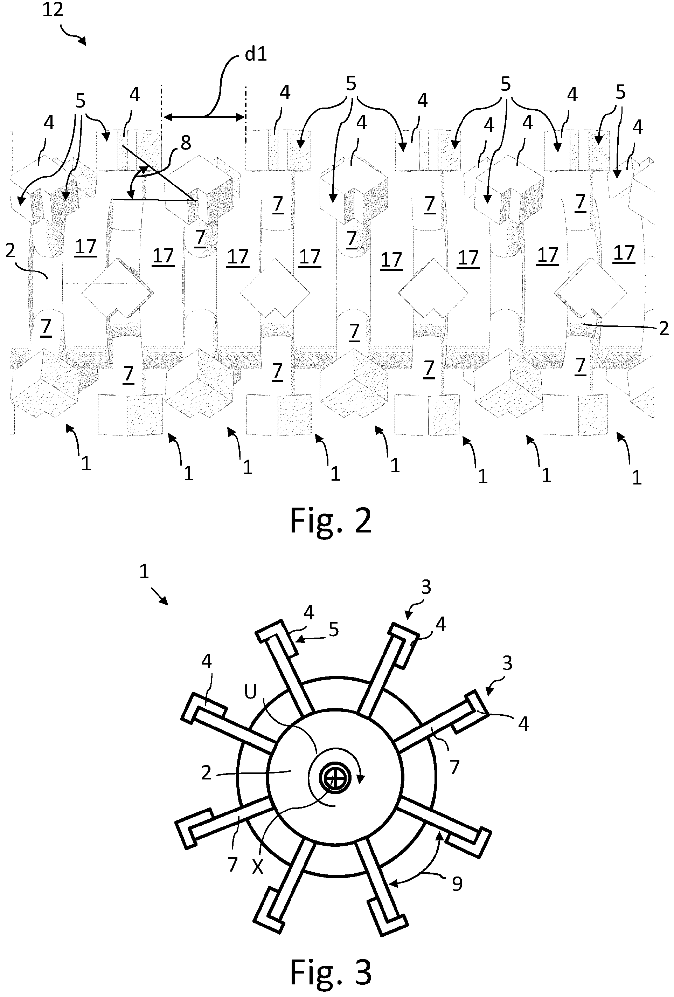

Die Distanzbuchse 17 kann zwischen benachbarten Vorrichtungen 1 auf der Rührwelle 12 montiert sein. Die Distanzbuchsen 17 sind in Fig. 1 als gestrichelte Linie schematisch dargestellt und nachfolgend in Fig. 2 anschaulicher illustriert und beschrieben.

Zur Unterstützung oder Verbesserung der Aktivierungsreaktion kann über die zusätzliche Öffnung 20 des Behälters 11 ein Reaktionsgas, ein Fluid oder ein Feststoff in den Behälter 11 zugegeben werden.

Wie in Fig. 1 beispielhaft anhand von gestrichelten bzw. gepunkteten Rechtecken dargestellt ist, kann der Behälter 11 eine Vielzahl von voneinander verschiedenen Aktivierungszonen Z1, Z2, Z3, Z4, Z5 aufweisen, die entlang einer Durchströmungsrichtung des zu aktivierenden Stoffes und/oder Stoffgemisches nacheinander angeordnet sind. Dabei kann eine Anzahl, eine Art und/oder eine Ausgestaltung der Vielzahl von voneinander verschiedenen Aktivierungszonen Z1, Z2, Z3, Z4, Z5 in Abhängigkeit des zu aktivierenden Stoffes und/oder Stoffgemisches gewählt sein. Die Durchströmungsrichtung korrespondiert zum Beispiel mit der Rotationsachse X der scheibenartigen Rührkörpereinrichtung 2 beziehungsweise der Rührwelle 12.

Der Behälter 11 kann ein Verhältnis von Länge zu Durchmesser in einem Bereich von etwa 2 bis etwa 5 aufweisen. Vorzugsweise ist der Behälter 11 zylinderförmig ausgebildet. Die Rotationsachse X der Rührwelle 12 kann zum Beispiel im Wesentlichen horizontal in dem Behälter 11 ausgerichtet sein. Insbesondere kann die Rührwelle 12 zentrisch in dem Behälter 11 drehbar angebracht sein. Darüber hinaus kann der Behälter 11 feststehend in Bezug zu einer Umgebung sein. Optional kann der Behälter 11 an seiner Innenseite eine Beschichtung aufweisen. Die Beschichtung kann ein reaktives Material, zum Beispiel Palladium, enthalten. Durch die Beschichtung kann die mechanochemische Reaktionswirkung in dem Behälter 11 verbessert oder überhaupt ermöglicht werden.

Beispielhaft umfasst die Vielzahl von voneinander verschiedenen Aktivierungszonen Z1, Z2, Z3, Z4, Z5 eine Einlaufzone Z1 zum verbesserten Einzug des zu aktivierenden Stoffes und/oder Stoffgemisches, eine Zerkleinerungszone Z2 zur Bereitstellung einer für die Aktivierung geeigneten Partikelgrößenverteilung, eine Aktivierungszone Z3 zur Schaffung einer größtmöglichen Aktivierung, eine optionale Relaxationszone Z4 und eine Austragszone Z5 zur Rückhaltung der Aktivierungskörper K und Vermeidung von Reaktionsprozessen des aktivierten Stoffes und/oder Stoffgemisches. Zum Beispiel sind die zuvor genannten Aktivierungszonen in der genannten Reihenfolge entlang der Durchströmungsrichtung angeordnet.

Dabei kann die Einlaufzone zumindest ein Einlaufwerkzeug aufweisen, wobei das Einlaufwerkzeug insbesondere als Einzugsschnecke, als Vorbrechelement 19 oder vergleichbares ausgebildet ist. Das zumindest eine Einlaufwerkzeug kann mehrere Einlaufwerkzeuge gleicher Art oder verschiedener Art kombinieren. Die Zerkleinerungszone bzw. Voraktivierungszone Z2 kann insbesondere dazu ausgebildet sein, eine für die Aktivierung geeignete Partikelgrößenverteilung zu erzielen, wobei je nach Art des zu aktivierenden Stoffes und/oder Stoffgemisches eine Erzeugung oder Vermeidung von Feinstanteil vorgesehen ist. Weiterhin kann die Aktivierungszone Z3 dazu ausgebildet sein, eine größtmögliche Aktivierung über eine Steuerung einer Verweilzeit in der Aktivierungszone Z3 und eine Beanspruchungsart und Beanspruchungsintensität in der Aktivierungszone Z3 zu erreichen. Die Austragszone bzw. Auslaufzone Z5 kann ein Trennsystem 18 zur Rückhaltung der Aktivierungskörper K und Vermeidung von Reaktionsprozessen des aktivierten Stoffes und/oder Stoffgemisches aufweisen.

Die Vielzahl von Vorrichtungen 1 weisen vorzugsweise die gleichen Merkmale auf, das heißt sie können gleichartig ausgebildet sein. Allerdings ist die Erfindung nicht auf gleichartig ausgebildete Vorrichtungen 1 auf der Rührwelle 12 beschränkt, sondern es können einzelne Eigenschaften der Vorrichtungen 1 voneinander abweichen und insbesondere an Anforderungen in den jeweiligen Aktivierungszonen Z1, Z2, Z3, Z4, Z5 angepasst sein.

Fig. 2 zeigt eine schematische Detailansicht eines Ausschnitts einer Rührwelle 12 eines Rührwerkssystems 10 gemäß einem weiteren Ausführungsbeispiel der Erfindung mit einer Vielzahl von versetzt zueinander angeordneten Schlageinheiten 3. Die Rührwelle 12 kann zum Beispiel in dem Rührwerkssystem 10 nach Fig. 1 integriert sein.

Auf der Rührwelle 12 sind beispielhaft eine Vielzahl von Vorrichtungen 1 zur mechanischen Aktivierung von organischen und/oder anorganischen Stoffen und/oder Stoffgemischen in chemischen, pharmazeutischen, lebensmitteltechnischen und/oder baustofftechnischen Anwendungen montiert, von denen acht in dem Ausschnitt abgebildet sind. Jede Vorrichtung 1 umfasst hier eine scheibenartige Rührkörpereinrichtung 2 und vier Schlageinheiten 3. Die vier Schlageinheiten 3 weisen jeweils einen Verlängerungsarm 7 und einen Kopfbereich 4 mit einer Aktivierungsfläche 5 zum Zusammenwirken mit Aktivierungskörpern K auf. Die vier Schlageinheiten 3 sind radial außen in Bezug zu einer Rotationsachse der scheibenartigen Rührkörpereinrichtung 2 an der scheibenartigen Rührkörpereinrichtung 2 befestigt.

Der Kopfbereich 4 kann eine im Wesentlichen würfelartige Form aufweisen, wie dies in Fig. 2 dargestellt ist. Der Verlängerungsarm 7 kann zum Beispiel zwischen der scheibenartigen Rührkörpereinrichtung 2 und der Aktivierungsfläche 5 angeordnet sein. Dabei kann ein erster Endbereich des Verlängerungsarms 7 an der scheibenartigen Rührkörpereinrichtung 2 befestigt sein und ein zweiter, dem ersten Endbereich abgewandter Endbereich mit der Aktivierungsfläche 5 gekoppelt sein.

Darüber hinaus ist hier beispielhaft zwischen benachbarten Vorrichtungen 1 jeweils eine Distanzbuchse 17 angeordnet. Die Distanzbuchse 17 kann im Durchmesser und in der Form variieren. Die Distanzbuchse 17 dient insbesondere einer gezielten Führung der Luft und des zu aktivierenden Stoffes und/oder Stoffgemisches durch den Behälter 11.

Hier ist die Aktivierungsfläche 5 in Bezug zu der Rotationsachse X beispielhaft in einem Winkelbereich 8 von etwa 0° bis etwa 45° ausgerichtet. Die Aktivierungsfläche 5 ist beispielsweise im Wesentlichen eben ausgebildet.

Ein Abstand d1 zwischen zwei Vorrichtungen 1 kann zum Beispiel zwischen einem 10-fachen und 30-fachen oder zwischen einem 4- und 100-fachen eines Durchmessers der Aktivierungskörper K betragen. Insbesondere kann der Abstand d1 zwischen zwei Kopfbereichen 4 von in einer Flucht zueinander angeordneten Schlageinheiten 3 bemessen sein, wie es beispielhaft in Fig. 2 illustriert ist.

Zum Beispiel kann die Rührwelle 12 einteilig oder mehrteilig ausgebildet sein. Alternativ oder zusätzlich kann die Rührwelle 12 als Massivwelle oder als Hohlwelle ausgebildet sein.

Anhand einer vorbestimmten Kombination von verschiedenen konstruktiven Aktivierungsparametern und von verschiedenen prozesstechnischen Aktivierungsparametern kann der zu aktivierende Stoff und/oder das Stoffgemisch durch die Aktivierungszonen Z1, Z2, Z3, Z4, Z5 geführt werden. Somit kann ein optimaler mechanochemischer Reaktionsablauf bereitgestellt werden. Die konstruktiven Aktivierungsparameter umfassen zum Beispiel unterschiedliche geometrische Ausführungen der scheibenartigen Rührkörpereinrichtung 2, des Verlängerungsarms 7 und/oder des Kopfbereichs 4 der Schlageinheit 3. Die prozesstechnischen Aktivierungsparameter umfassen zum Beispiel eine Umfangsgeschwindigkeit, einen Füllgrad der Aktivierungskörper, eine Temperatur in dem Behälter 11 und/oder eine Durchströmung des Behälters mit einem für die mechanochemische Reaktion notwendigen Prozessgas.

Fig. 3 zeigt eine schematische Seitenansicht einer Vorrichtung 1 zur mechanischen Aktivierung von organischen und/oder anorganischen Stoffen und/oder Stoffgemischen in chemischen, pharmazeutischen, lebensmitteltechnischen und/oder baustofftechnischen Anwendungen gemäß einem weiteren Ausführungsbeispiel der Erfindung. In der Ausführungsform nach Fig. 3 kann von einer geschlossenen Ausführung der Vorrichtung 1 gesprochen werden.

Die Vorrichtung 1 umfasst hier beispielhaft eine scheibenartige Rührkörpereinrichtung 2 zur drehfesten Montage auf einer Rührwelle 12 sowie mindestens eine Schlageinheit 3, die einen Kopfbereich 4 mit einer Aktivierungsfläche 5 zum Zusammenwirken mit Aktivierungskörpern aufweist. Die mindestens eine Schlageinheit 3 ist radial außen in Bezug zu einer Rotationsachse X der scheibenartigen Rührkörpereinrichtung 2 an der scheibenartigen Rührkörpereinrichtung 2 befestigt. Insbesondere kann die mindestens eine Schlageinheit 3 in Bezug zu der Rotationsachse X von der scheibenartigen Rührkörpereinrichtung 2 radial bzw. in radialer Richtung abragen.

Zum Beispiel kann die mindestens eine Schlageinheit 3 eine Vielzahl von Schlageinheiten 3, hier beispielsweise acht, aufweisen, die in einer Umfangsrichtung U der scheibenartigen Rührkörpereinrichtung 2 gleichmäßig verteilt angeordnet sind. Auf diese Weise kann der Stoff und/oder das Stoffgemisch durch die Vielzahl von Schlageinheiten 3 im Wesentlichen gleichmäßig aktiviert werden, wenn die scheibenartige Rührkörpereinrichtung 2 rotiert.

Die Vielzahl von Schlageinheiten 3 kann in Abhängigkeit von einem Winkel 9 zwischen zwei benachbarten Schlageinheiten 3, von einem Durchmesser der scheibenartigen Rührkörpereinrichtung 2, von einer Drehzahl der scheibenartigen Rührkörpereinrichtung 2 und von einem Durchmesser der Aktivierungskörper K gewählt sein. Somit kann die Anzahl der Schlageinheiten 3 an der scheibenartigen Rührkörpereinrichtung 2 bedarfsgerecht gewählt werden. Der Winkel 9 zwischen zwei benachbarten Schlageinheiten 3 kann zum Beispiel etwa 10° bis etwa 180°, insbesondere etwa 10° bis etwa 120°, betragen.

Optional kann der Kopfbereich 4 austauschbar mit der Schlageinheit 3 verbunden sein. Auf diese Weise kann der Kopfbereich 4 nach Bedarf gewechselt werden, wenn zum Beispiel die Aktivierungsfläche 5 verschlissen ist oder wenn zum Beispiel eine andere Größe und/oder Form der Aktivierungsfläche 5 für den zu aktivierenden Stoff und/oder Stoffgemisch vorgesehen ist. Damit kann der Kopfbereich 4 modulartig ausgebildet sein. Vorteilhafterweise kann somit eine Flächenbelastung der Aktivierungsfläche 5 verbessert oder eine Breite des Kopfbereichs 4 in Abhängigkeit von einer Härte des zu aktivierenden Stoffes und/oder Stoffgemisches verändert werden.

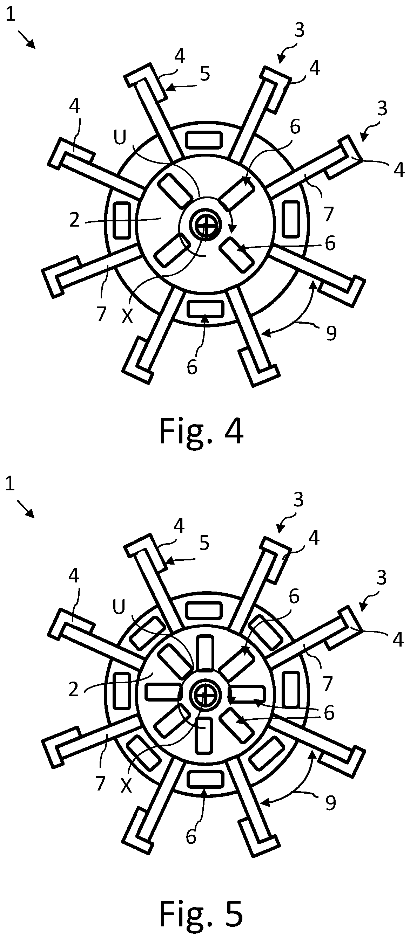

Fig. 4 zeigt eine schematische Seitenansicht der Vorrichtung 1 aus Fig. 3 gemäß einem weiteren Ausführungsbeispiel der Erfindung mit einer Vielzahl von Durchgangsöffnungen in der Rührkörpereinrichtung. In der Ausführungsform nach Fig. 4 kann von einer teilweise offenen Ausführung der Vorrichtung 1 gesprochen werden.

Beispielhaft weist die scheibenartige Rührkörpereinrichtung 2 mindestens eine Durchgangsöffnung 6 die sich in Richtung der Rotationsachse erstreckt. Darüber hinaus kann eine Größe der mindestens einen Durchgangsöffnung 6 veränderbar sein, sodass eine Durchlässigkeit der scheibenartigen Rührkörpereinrichtung 2 variiert werden kann. Auf diese Weise kann eine durchströmende Luftmenge und ein zu aktivierender Stoff und/oder Stoffgemisch gezwungen werden die scheibenartige Rührkörpereinrichtung 2 zum umströmen. Die mindestens eine Durchgangsöffnung 6 kann zum Beispiel einen runden oder eine vieleckigen, beispielsweise viereckigen, Querschnitt aufweisen.

Insbesondere kann die mindestens eine Durchgangsöffnung 6 eine Vielzahl von Durchgangsöffnungen 6, beispielsweise acht Durchgangsöffnungen, aufweisen, die in einer Umfangsrichtung U der scheibenartigen Rührkörpereinrichtung 2 gleichmäßig verteilt angeordnet sind. Somit kann der Stoff und/oder das Stoffgemisch die scheibenartige Rührkörpereinrichtung 2 passieren bzw. durchströmen ohne in Kontakt mit der mindestens einen Schlageinheit 3 zu kommen.

Optional kann eine Distanzbuchse 17, wie sie zum Beispiel in Fig. 2 beschrieben ist, eine Durchgangsöffnung aufweisen, die mit der Durchgangsöffnung 6 der scheibenartigen Rührkörpereinrichtung 2 korrespondiert, sodass die Durchgangsöffnung der Distanzbuchse 17 und die Durchgangsöffnung 6 der scheibenartigen Rührkörpereinrichtung 2 eine gemeinsame Durchgangsöffnung 6 bilden können. Mit anderen Worten können die Durchgangsöffnung der Distanzbuchse 17 und die Durchgangsöffnung 6 der scheibenartigen Rührkörpereinrichtung 2 in einer Flucht angeordnet sein. Damit kann eine Luftführung und folglich eine Steuerung einer Strömungsrichtung und einer Strömungsgeschwindigkeit beeinflusst werden.

Fig. 5 zeigt eine schematische Seitenansicht der Vorrichtung 1 aus Fig. 3 und 4 gemäß einem weiteren Ausführungsbeispiel der Erfindung mit einer Vielzahl von Durchgangsöffnungen in der Rührkörpereinrichtung. In der Ausführungsform nach Fig. 5 kann von einer offenen Ausführung der Vorrichtung 1 gesprochen werden.

Im Unterschied zu Fig. 4 weist die Vorrichtung 1 hier beispielsweise sechzehn Durchgangsöffnungen 6 auf, die in einer Umfangsrichtung U der scheibenartigen Rührkörpereinrichtung 2 gleichmäßig verteilt angeordnet sind. Insbesondere sind die Durchgangsöffnungen 6 zum Beispiel in der Form von mehreren Ringen, beispielsweise zwei Ringen wie in Fig. 5 illustriert, angeordnet.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

### Bezugszeichenliste

- 1: Vorrichtung
- 2: scheibenartige Rührkörpereinrichtung
- 3: Schlageinheit
- 4: Kopfbereich
- 5: Aktivierungsfläche
- 6: Durchgangsöffnung
- 7: Verlängerungsarm
- 8: Winkelbereich der Aktivierungsfläche
- 9: Winkel zwischen zwei benachbarten Schlageinheiten
- 10: Rührwerkssystem
- 11: Behälter
- 12: Rührwelle
- 13: Temperieraggregat
- 14: Motor
- 15: Einlauföffnung
- 16: Auslauföffnung
- 17: Distanzbuchse
- 18: Trennsystem
- 19: Vorbrechelement
- 20: zusätzliche Öffnung
- d1: Abstand zwischen zwei Vorrichtungen
- K: Aktivierungskörper
- X: Rotationsachse
- U: Umfangsrichtung
- Z1: Einlaufzone
- Z2: Zerkleinerungszone
- Z3: Aktivierungszone
- Z4: Relaxationszone
- Z5: Austragszone

## Patentansprüche

1. Vorrichtung (1) zur mechanischen Aktivierung von organischen und/oder anorganischen Stoffen und/oder Stoffgemischen in chemischen, pharmazeutischen, lebensmitteltechnischen und/oder baustofftechnischen Anwendungen, die Vorrichtung (1) umfassend:
eine scheibenartige Rührkörpereinrichtung (2) zur drehfesten Montage auf einer Rührwelle (12); und
mindestens eine Schlageinheit (3), die einen Kopfbereich (4) mit einer Aktivierungsfläche (5) zum Zusammenwirken mit Aktivierungskörpern (K) aufweist, wobei die mindestens eine Schlageinheit (3) radial außen in Bezug zu einer Rotationsachse (X) der scheibenartigen Rührkörpereinrichtung (2) an der scheibenartigen Rührkörpereinrichtung (2) befestigt ist.

2. Vorrichtung (1) nach Anspruch 1, wobei die mindestens eine Schlageinheit (3) eine Vielzahl von Schlageinheiten (3) aufweist, die in einer Umfangsrichtung (U) der scheibenartigen Rührkörpereinrichtung (2) gleichmäßig verteilt angeordnet sind.

3. Vorrichtung (1) nach Anspruch 2, wobei die Vielzahl von Schlageinheiten (3) in Abhängigkeit von einem Winkel (9) zwischen zwei benachbarten Schlageinheiten (3), von einem Durchmesser der scheibenartigen Rührkörpereinrichtung (2), von einer Drehzahl der scheibenartigen Rührkörpereinrichtung (2) und von einem Durchmesser der Aktivierungskörper (K) gewählt ist.

4. Vorrichtung (1) nach einem der vorhergehenden Ansprüche, wobei die scheibenartige Rührkörpereinrichtung (2) mindestens eine Durchgangsöffnung (6) aufweist, die sich in Richtung der Rotationsachse erstreckt.

5. Vorrichtung (1) nach Anspruch 4, wobei die mindestens eine Durchgangsöffnung (6) eine Vielzahl von Durchgangsöffnungen (6) aufweist, die in einer Umfangsrichtung (U) der scheibenartigen Rührkörpereinrichtung (2) gleichmäßig verteilt angeordnet sind.

6. Vorrichtung (1) nach einem der vorhergehenden Ansprüche, wobei die Aktivierungsfläche (5) in Bezug zu der Rotationsachse (X) in einem Winkelbereich (8) von etwa 0° bis etwa 45° ausgerichtet ist.

7. Vorrichtung (1) nach einem der vorhergehenden Ansprüche, wobei der Kopfbereich (4) austauschbar mit der Schlageinheit (3) verbunden ist.

8. Vorrichtung (1) nach einem der vorhergehenden Ansprüche, wobei der Kopfbereich (4) eine im Wesentlichen würfelartige Form aufweist.

9. Vorrichtung (1) nach einem der vorhergehenden Ansprüche, wobei die mindestens eine Schlageinheit (3) einen Verlängerungsarm (7) aufweist, welcher zwischen der scheibenartigen Rührkörpereinrichtung (2) und der Aktivierungsfläche (5) angeordnet ist.

10. Rührwerkssystem (10) zur mechanischen Aktivierung von organischen und/oder anorganischen Stoffen und/oder Stoffgemischen in chemischen, pharmazeutischen, lebensmitteltechnischen und/oder baustofftechnischen Anwendungen, das Rührwerkssystem (10) umfassend:
einen Behälter (11) zur Aufnahme von Aktivierungskörpern (K) sowie von einem zu aktivierenden Stoff und/oder Stoffgemisch;
eine Rührwelle (12), die in dem Behälter (11) und drehbar in Bezug zu dem Behälter (11) gelagert ist; und
mindestens eine Vorrichtung (1) nach einem der vorhergehenden Ansprüche, wobei die scheibenartige Rührkörpereinrichtung (2) auf der Rührwelle (12) drehfest montiert ist.

11. Rührwerkssystem (10) nach Anspruch 10, wobei ein radial äußeres Ende der mindestens einen Schlageinheit (3) einen Abstand zu dem Behälter (11) im Bereich des zweifachen bis zehnfachen eines Durchmessers der Aktivierungskörper (K) aufweist.

12. Rührwerkssystem (10) nach Anspruch 10 oder 11, wobei die mindestens eine Vorrichtung (1) eine Vielzahl von Vorrichtungen (1) aufweist, die in Reihe auf der Rührwelle (12) angeordnet sind.

13. Rührwerkssystem (10) nach Anspruch 12, wobei jeweils die mindestens eine Schlageinheit (3) benachbarter Vorrichtungen der Vielzahl von Vorrichtungen (1) mit einem Versatz von 5° bis 90° zueinander auf der Rührwelle (12) angeordnet sind.

14. Rührwerkssystem (10) nach einem der Ansprüche 10 bis 13, wobei der Behälter (11) eine Vielzahl von voneinander verschiedenen Aktivierungszonen (Z1, Z2, Z3, Z4, Z5) aufweist, die entlang einer Durchströmungsrichtung des zu aktivierenden Stoffes und/oder Stoffgemisches nacheinander angeordnet sind.

15. Rührwerkssystem (10) nach Anspruch 14, wobei die Vielzahl von voneinander verschiedenen Aktivierungszonen (Z1, Z2, Z3, Z4, Z5) zumindest eine Aktivierungszone umfasst ausgewählt aus der Gruppe von einer Einlaufzone (Z1) zum verbesserten Einzug des zu aktivierenden Stoffes und/oder Stoffgemisches, einer Zerkleinerungszone (Z2) zur Bereitstellung einer für die Aktivierung geeigneten Partikelgrößenverteilung, einer Aktivierungszone (Z3) zur Schaffung einer größtmöglichen Aktivierung, einer Relaxationszone (Z4) und einer Austragszone (Z5) zur Rückhaltung der Aktivierungskörper (K) und Vermeidung von Reaktionsprozessen des aktivierten Stoffes und/oder Stoffgemisches.

16. Rührwerkssystem (10) nach einem der Ansprüche 10 bis 15, wobei die Aktivierungskörper (K) im Wesentlichen kugelförmig ausgebildet sind, wobei ein kugeläquivalenter Durchmesser der Aktivierungskörper (K) im Bereich von etwa 1 mm bis etwa 15 mm liegt.

17. Rührwerkssystem (10) nach einem der Ansprüche 10 bis 16, wobei der Behälter (11) einen Doppelmantel zur Isolierung seines Innenraums gegenüber einer Umgebung aufweist.

18. Rührwerkssystem (10) nach einem der Ansprüche 10 bis 17, wobei die Rührwelle (12) motorisch angetrieben ist.

19. Rührwerkssystem (10) nach einem der Ansprüche 10 bis 18, ferner umfassend eine Einlauföffnung (15) und eine Auslauföffnung (16) aufweist, wobei die Einlauföffnung (15) und die Auslauföffnung (16) auf gegenüberliegenden Seiten des Behälters (11) angeordnet sind.

20. Rührwerkssystem (10) nach einem der Ansprüche 10 bis 19, ferner umfassend eine Distanzbuchse (17), die zwischen benachbarten Vorrichtungen (1) auf der Rührwelle (12) montiert ist.
